# EUROPÄISCHE PATENTSCHRIFT

(11) **EP 0 614 397 B1**
(45) Veröffentlichungstag und Bekanntmachung des Hinweises auf die Patenterteilung: **12.02.1997**
(21) Anmeldenummer: 93921848.3
(22) Anmeldetag: 24.09.1993
(51) Int. Cl.: B01D 29/01, B01D 29/44, B01D 29/64, B01D 29/92, B01D 29/94, E02B 8/02

(54) **ABWASSERANLAGE MIT EINGEBAUTER SIEBRECHENEINHEIT**
SEWAGE WATER INSTALLATION WITH AN INCORPORATED SCREENING UNIT
INSTALLATION POUR EAUX USEES AVEC ENSEMBLE GRILLE DE RETENUE INCORPORE

(30) Priorität: 25.09.1992 CH 3015/92
(43) Veröffentlichungstag der Anmeldung: 14.09.1994
(73) Patentinhaber: ROMAG RÖHREN UND MASCHINEN AG, CH-3186 Düdingen (CH)
(72) Erfinder: GRESA, Louis, CH-8340 Hinwil (CH)
(74) Vertreter: KUHNEN, WACKER & PARTNER
(86) Internationale Anmeldenummer: EP9302594
(87) Internationale Veröffentlichungsnummer: WO9407585

(56) Entgegenhaltungen:
- EP-A- 0 358 952
- WO-A-92/21837

## Beschreibung

Die Erfindung bezieht sich auf eine Abwasseranlage, bestehend aus einem mit mindestens einer Zuflussleitung und mindestens einer Abflussleitung in Verbindung stehenden Entlastungsbecken und einer darin angeordneten Siebrecheneinheit, welche einen aus parallel zueinander angeordneten Rechenstäben bestehenden Siebrechen sowie einen hin- und herbewegbaren Reinigungswagen umfaßt, an welchem ein mit Zähnen zwischen den Rechenstäben des Siebrechens angeordneter Reinigungskamm befestigt ist.

Abwasseranlagen mit in entsprechend dimensionierten Kanälen eingebauten Siebrechen zum Zurückhalten sperriger Schwimmstoffe, wie beispielsweise Holzstücke, Kunststoffe, Papier oder dergleichen, sind allgemein bekannt. Bei diesen Anlagen sind an verschiedenen Stellen sogenannte Hochwasserentlastungen eingebaut, durch welche bei stärkeren Niederschlägen ein Teil des mit Schmutzwasser vermischten Regenwassers in ein Gewässer abgeleitet wird. Zur Vermeidung der Ableitung des mit Schwimm- oder Schwebstoffen belasteten Schmutzwassers und des Regenwassers können sogenannte Entlastungsbecken zugeordnet werden, in welchen das Mischwasser gespeichert wird. In Verbindung mit einer Abwasseranlage der genannten Art ist aus der EP-A 0 358 952 eine Siebrecheneinheit bekannt, welche einen im wesentlichen aus parallel zueinander angeordneten Rechenstäben bestehenden Siebrechen umfaßt, zwischen denen dreieckförmige Zähne eines zur Reinigung der Rechenstäbe hin- und herbewegbaren Reinigungskammes angeordnet sind.

Der Erfindung liegt die Aufgabe zugrunde, eine Abwasseranlage der genannten Art dahingehend zu verbessern, daß unter Vermeidung einer Rückstaugefahr und ohne Verminderung des Rückhaltevolumens auch bei länger anhaltendem Regenwetter, insbesondere aber bei Gewittern, die in relativ kurzer Zeit anfallenden und stark mit Schwimmstoffen belasteten Mischwassermengen aufgenommen und, von Schwimmstoffen befreit, als gereinigtes Abwasser abgeleitet werden können.

Diese Aufgabe wird erfindungsgemäß durch die im Patentanspruch 1 angegebenen Merkmale gelöst. Vorteilhafte Ausgestaltungen der Erfindung ergeben sich aus den Unteransprüchen.

Mit der Erfindung kann unter Beibehaltung einer optimalen Reinigungswirkung in einfacher Weise eine vergleichmäßigte Durchtrittsgeschwindigkeit sowie eine gleichmäßigere Druckverteilung über die gesamte Fläche der Siebrecheneinheit erreicht werden.

Weitere Merkmale der Erfindung ergeben sich aus der folgenden Beschreibung in Verbindung mit den Zeichnungen. Es zeigen:
Fig. 1 ein schematisches und in Schnittansicht dargestelltes Teilstück eines ersten Ausführungsbeispiels einer Abwasseranlage mit eingebauter Sierbrecheneinheit;
Fig. 2 die in Draufsicht dargestellte Abwasseranlage gemäß Fig. 1;
Fig. 3 ein schematisch und in Schnittansicht dargestelltes Teilstück eines zweiten Ausführungsbeispiels einer Abwasseranlage;
Fig. 4 die in Draufsicht dargestellte Abwasseranlage gemäß Fig. 3;
Fig. 5 eine Abwandlung der Ausführungsform gemäß den Fig. 1 und 2; und
Fig. 6 eine Abwandlung des Ausführungsbeispiels gemäß den Fig. 3 und 4.

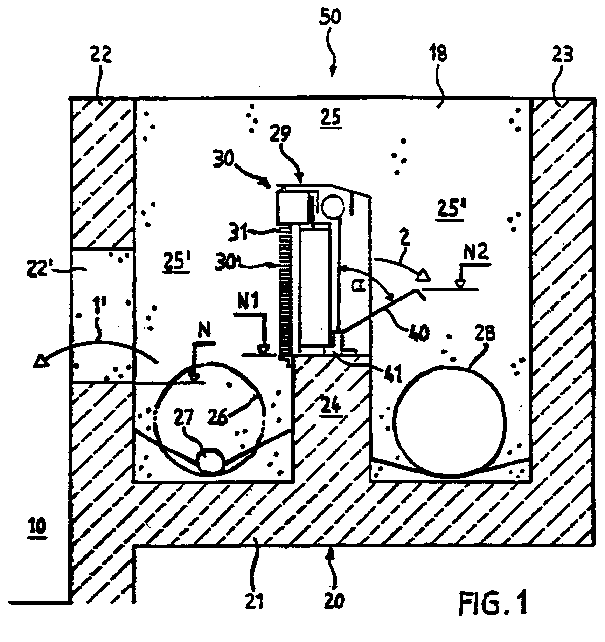

Fig. 1 zeigt als erstes Ausführungsbeispiel ein schematisches und in Schnittansicht dargestelltes Teilstück einer in der Gesamtheit mit 50 bezeichneten Abwasseranlage, welche im wesentlichen ein teilweise dargestelltes Rückhaltebecken 10 und ein über eine Überlauföffnung 22' damit in Verbindung stehendes Entlastungsbecken 20 umfaßt.

Das Entlastungsbecken 20 hat einen Boden 21 und zwei im Abstand zueinander angeordnete Seitenwände 22 und 23, eine Vorderwand 19 und Rückwand 18 sowie eine Zwischenwand 24, welche im dargestellten Ausführungsbeispiel in Längsrichtung des Entlastungsbeckens 20 angeordnet ist. Ein durch den Boden 21 und durch die Seitenwände 22 und 23 sowie durch die Vorder- und Rückwand 19, 18 gebildeter Beckenraum 25 ist durch die Zwischenwand 24 in einen Stauraum (Zuflußraum) 25' und einen Abflußraum 25'' unterteilt. Die Überlauföffnung 22' erstreckt sich weitgehend über die gesamte Länge der Seitenwand 22. Der Stauraum 25' steht mit einer die Vorderwand 19 durchdringenden Zuflußleitung 26 und einer die Rückwand 18 durchdringenden Abflußleitung 27 in Verbindung. Dem Abflußraum 25'' ist eine die Rückwand 18 durchdringende Abflußleitung 28 zugeordnet.

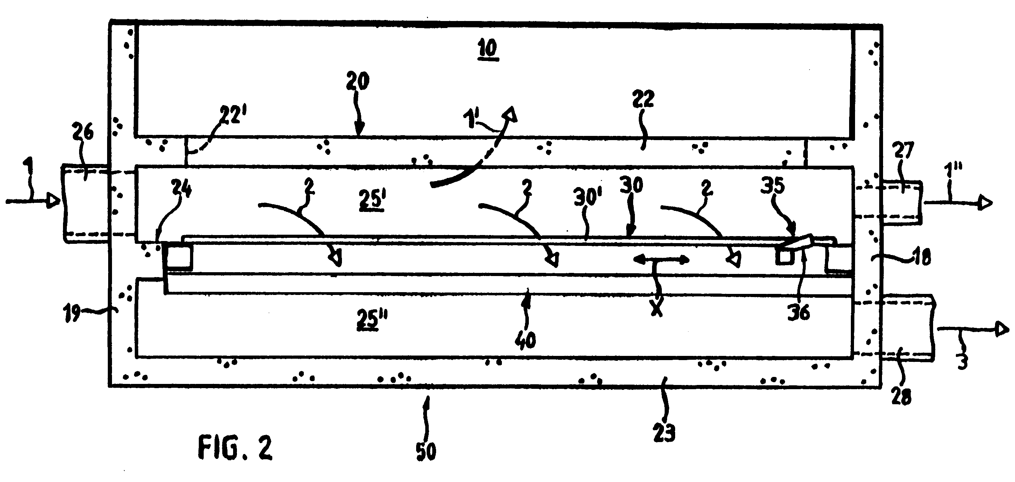

Weiterhin erkennt man in Fig. 1 eine auf der Zwischenwand 24 angeordnete und schematisch dargestellte Siebrecheneinheit 30, welche mit der Oberkante 29 eine Notentlastung vom Stauraum 25' zum Abflußraum 25'' bildet. Die Siebrecheneinheit 30 umfaßt einen schematisch dargestellten Siebrechen 30' mit in parallelem Abstand zueinander angeordneten Rechenstäben 31. Dem Siebrechen 30' ist ein in Längsrichtung hin- und herbewegbarer Reinigungswagen 35 (Fig. 2) zugeordnet. Bei größerer Länge des Siebrechens 30' können auch mehrere Reinigungswagen vorgesehen sein.

Ein bevorzugter und mit entsprechend ausgebildeten und zwischen den Rechenstäben des Siebrechens angeordneten Zähnen versehener Reinigungswagen ist aus der eingangs erwähnten EP-A 0 358 952 bekannt, wobei auch andere den Siebrechen von Schwimmstoffen befreiende Reinigungselemente eingebaut werden können.

An der Rück- oder Abflußseite des Siebrechens 30' ist ein schematisch dargestelltes und als Wehr ausgebildetes Stauelement 40 angeordnet. Das in den Abflußraum 25'' ragende Stauelement 40 ist in bezug auf den in der Vertikalebene liegenden Siebrechen 30' unter einem Winkel α geneigt an der Zwischenwand 24 angeordnet und mit nicht dargestellten Mitteln befestigt. Eine schematisch dargestellte Halte- und Befestigungsvorrichtung 41 ist derart ausgebildet, daß das Stauelement 40 in seiner Relativlage zum Siebrechen 30' verstellbar und in der gewünschten Position feststellbar ist. Die Relativlage des Stauelements 40 zum Siebrechen 30' kann je nach der von der anfallenden Wassermenge abhängigen Belastung mit geeigneten Mitteln, zum Beispiel sensorgesteuert, eingestellt und festgestellt werden.

Mit dem zusätzlichen, eine Niveauhöhe N2 bildenden Stauelement 40 wird die Niveauhöhe N1 des Abflusses vom Stauraum 25' zum Abflußraum 25'' erhöht. Hiermit wird erreicht, daß einerseits das Rückhaltevolumen erhöht und andererseits der Wasserdruck weitgehend gleichmäßig auf die gesamte Fläche des Siebrechens verteilt wird. Weiterhin wird die Durchflußgeschwindigkeit des Wassers durch die unteren Bereiche des Siebrechens 30' reduziert, wodurch die Schwimmstoffe besser durch die einzelnen Rechenstäbe zurückgehalten werden können und somit eine optimale Reinigungswirkung erreicht wird. Die Verringerung der Durchflußgeschwindigkeit bewirkt ferner, daß die vorhandenen Schwimmstoffe nicht mehr mitgerissen werden.

In Fig. 2 ist die Abwasseranlage 50 in Draufsicht dargestellt, und man erkennt das neben dem teilweise und schematisch dargestellten Rückhaltebecken 10 angeordnete Entlastungsbecken 20, welches im wesentlichen aus der Vorderwand 19 und der Rückwand 18, den beiden Seitenwänden 22 und 23 sowie der Zwischenwand 24 gebildet ist. Weiterhin erkennt man den schematisch dargestellten Siebrechen 30' der Siebrecheneinheit 30 sowie den mit nicht dargestellten Mitteln in Doppelpfeilrichtung X hin- und herbewegbaren Reinigungswagen 35, welcher mit zwischen den Rechenstäben 31 des Siebrechens 30' angeordneten, dreieckförmig ausgebildeten Zähnen 36 versehen ist.

An der Vorderwand 19 ist die Zuflußleitung 26 angeordnet, durch welche dem Zuflußraum 25' das Abwasser bzw. Regenwasser in Pfeilrichtung 1 zugeführt wird. Das Abwasser wird einerseits durch die Leitung 27 in Pfeilrichtung 1'' abgeführt und bei bestimmter Niveauhöhe N, wie in Fig. 1 dargestellt, durch die Öffnung 22' in Pfeilrichtung 1' ins Rückhaltebecken 10 geleitet. Beim Erreichen einer Niveauhöhe N2 wird das Abwasser in Pfeilrichtung 2 durch den Siebrechen 30' und über die Oberkante des Stauelements 40 in den Abflußraum 25'' geleitet und über die Abflußleitung 28 als vor Schwimmstoffen gereinigtes Wasser in Pfeilrichtung 3 abgeleitet.

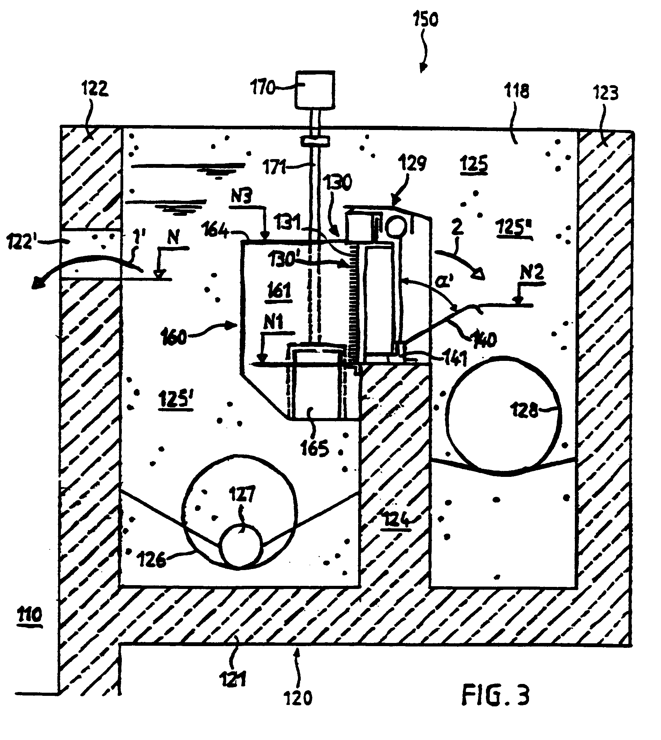

Fig. 3 zeigt als zweites Ausführungsbeispiel ein schematisch und in Schnittansicht dargestelltes Teilstück einer in der Gesamtheit mit 150 bezeichneten Abwasseranlage, welche im wesentlichen ein teilweise dargestelltes Rückhaltebecken 110 und ein über eine Überlauföffnung 122' damit in Verbindung stehendes erstes Entlastungsbecken 120 umfaßt.

Die Abwasseranlage 150 entspricht im wesentlichen der vorstehend in Verbindung mit Fig. 1 und Fig. 2 beschriebenen Abwasseranlage 50.

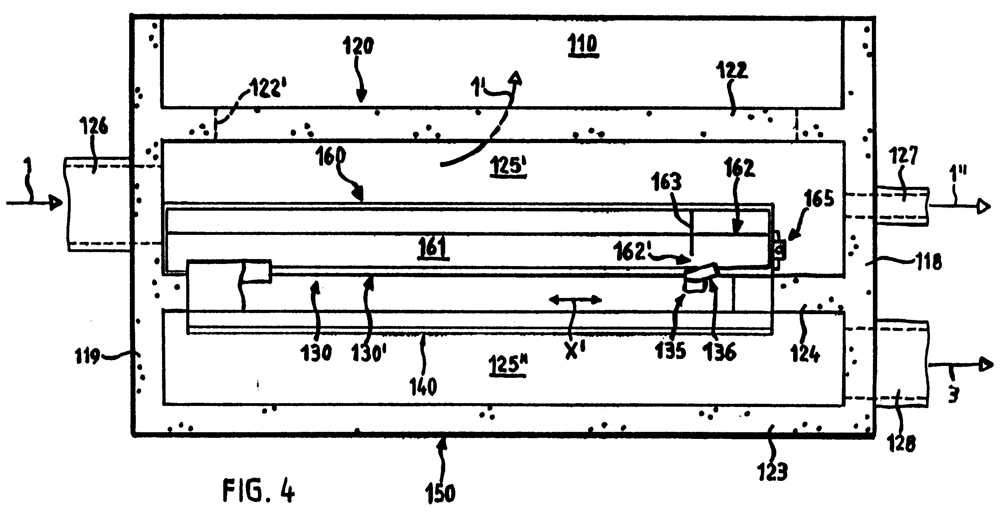

Die Abwasseranlage 150 umfaßt das aus einem Boden 121, zwei Seitenwänden 122 und 123, einer Vorderwand 119 und einer Rückwand 118 bestehende Entlastungsbecken 120 sowie eine in Längsrichtung des Entlastungsbeckens 120 orientierte Zwischenwand 124. In der Seitenwand 122 ist eine sich weitgehend über die gesamte Länge der Seitenwand 122 erstreckende Überlauföffnung 122' vorgesehen. Ein durch den Boden 121 und durch die Seitenwände 122 und 123 sowie die Vorder- und Rückwand 119, 118 gebildeter Beckenraum 125 ist durch die Zwischenwand 124 in einen Stauraum 125' und einen Abflußraum 125'' unterteilt. Der Stauraum 125' steht mit einer die Vorderwand 119 durchdringenden Zuflußleitung 126 und einer die Rückwand 118 durchdringenden Abflußleitung 127 in Verbindung. Dem Abflußraum 125'' ist eine Abflußleitung 128 zugeordnet. Weiterhin erkennt man in Fig. 3 eine schematisch dargestellte und an der Zwischenwand 124 angeordnete Siebrecheneinheit 130, welche einen Siebrechen 130' mit in parallelem Abstand zueinander angeordneten Rechenstäben 131 aufweist. Dem Siebrechen 130' ist ein in Längsrichtung hin- und herbewegbarer Reiniungswagen 135 (Fig. 4) zugeordnet. Eine mit 129 bezeichnete Oberkante der Siebrecheneinheit 130 bildet im wesentlichen eine sogenannte Notentlastung vom Stauraum 125' zum Abflußraum 125''.

An der Rück- oder Abflußseite des Siebrechens 130' ist ein schematisch dargestelltes und als Wehr ausgebildetes Stauelement 140 angeordnet. Das in den Abflußraum 125'' ragende Stauelement 140 ist in bezug auf den Siebrechen 130', unter einem Winkel α' geneigt, an der Zwischenwand 124 angeordnet und befestigt. Eine schematisch dargestellte Halte- und Befestigungsvorrichtung 141 ist derart ausgebildet, daß das Stauelement 140 in seiner Relativlage zum Siebrechen 130' verstellbar und in der gewünschten Position feststellbar ist. Die Relativlage des Stauelements 140 zum Siebrechen 130' kann je nach der von der anfallenden Wassermenge abhängigen Belastung mit geeigneten Mitteln, zum Beispiel sensorgesteuert, eingestellt und festgestellt werden.

In Fig. 4 ist die Abwasseranlage 150 in Draufsicht dargestellt, und man erkennt das neben dem teilweise und schematisch dargestellten Rückhaltebecken 110 angeordnete erste Entlastungsbecken 120, welches im wesentlichen aus der Vorderwand 119 und der Rückwand 118, den beiden Seitenwänden 122 und 123 sowie der Zwischenwand 124 gebildet ist. Weiterhin erkennt man den schematisch dargestellten Siebrechen 130' der Siebrecheneinheit 130 sowie den mit nicht dargestellten Mitteln in Doppelfpeilrichtung X' hin- und herbewegbaren Reinigungswagen 135, welcher mit zwischen den Rechenstäben 131 angeordneten, dreieckförmig ausgebildeten Zähnen 136 versehen ist. An der Vorderwand 119 ist die Zuflußleitung 126 angeordnet, durch welche dem Zuflußraum 125' das Abwasser in Pfeilrichtung 1 zugeführt wird.

Abweichend von dem ersten Ausführungsbeispiel gemäß Fig. 1 und Fig. 2 ist bei dem zweiten Ausführungsbeispiel gemäß Fig. 3 und Fig. 4 in dem Zuflußraum 125' des ersten Entlastungsbeckens 120 ein der Siebrecheneinheit 130 zugeordnetes zweites Entlastungsbecken 160 vorgesehen. Das zweite Entlastungsbecken 160 bildet eine dem Siebrechen 130' vorgeschaltete Vorkammer 161, welche im oberen Bereich eine Überlaufkante 164 (Fig. 3) aufweist. Die Vorkammer 161 des zweiten Entlastungsbeckens 160 ist, wie in Fig. 4 dargestellt, zur Bildung eines Siebgutschachtes 162 durch eine Trennwand 163 unterteilt, wobei die Vorkammer 161 mit dem Siebgutschacht 162 durch eine Öffnung 162' miteinander verbunden sind.

Der Siebautschacht 162 dient zur Aufnahme des vom Siebrechen 130' zugeführten Siebgutes. Im unteren Bereich des zweiten Entlastungsbeckens 160 ist dem Siebgutschacht 162 ein Schieberelement 165 zum Ablassen des Siebgutes (nicht dargestellt) vorgesehen. Zum Öffnen und Schließen des Schieberelements 165 ist dieses, wie in Fig. 3 dargestellt, über ein Zugglied 171 mit einem Antrieb 170 wirkverbunden.

Bei diesem Ausführungsbeispiel gemäß Fig. 3 und Fig. 4 wird das über die Leitung 126 dem Zuflußraum 125' zugeführte Abwasser durch die Leitung 127 in Pfeilrichtung 1'' abgeführt. Bei Erreichen einer Niveauhöhe N wird das Abwasser, wie in Fig. 3 dargestellt, in Pfeilrichtung 1' in das Rückhaltebecken 110 geleitet. Beim Erreichen einer höher liegenden Niveauhöhe N3 im Zuflußraum 125' gelangt das Abwasser in die Vorkammer 161 des zweiten Entlastungsbeckens 160 und wird darin so lange gestaut, bis die in bezug auf die Niveauhöhe N1 (Überlaufkante der Zwischenwand 124) erhöhte Niveauhöhe N2 des zusätzlichen Stauelements 140 erreicht ist. Das in Pfeilrichtung 2 durch den Siebrechen 130' über das Stauelement 140 fließende Wasser gelangt in den Abflußraum 128 und wird danach als von Schwimmstoffen gereinigtes Wasser abgeleitet.

An dieser Stelle wird darauf hingewiesen, daß das Stauelement 40 oder 140 in bezug auf die Siebrecheneinheit 30 oder 130 unter einem in der Größenordnung von 30° bis 45° liegenden Winkel α oder α' an der Zwischenwand 24 oder 124 oder gegebenenfalls auch an der Siebrecheneinheit angeordnet und befestigt ist. Durch die verstellbare Neigung des Stauelements 40 oder 140 in bezug auf die Siebrecheneinheit 30 oder 130 kann die Durchflußgeschwindigkeit eingestellt werden.

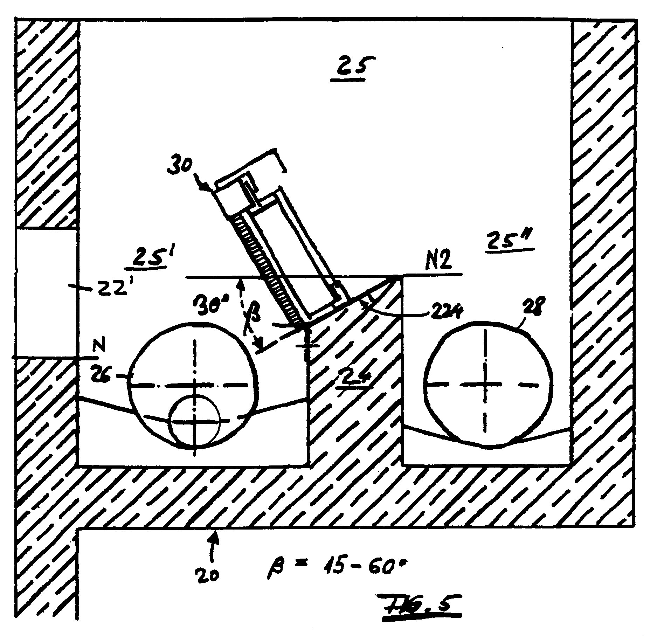

In Fig. 5 ist eine abgewandelte Ausführungsform des Ausführungsbeispiels gemäß den Fig. 1 und 2 dargestellt. Diese abgewandelte Ausführungsform stimmt mit Ausnahme der nachstehend angegebenen Änderungen mit dem Ausführungsbeispiel gemäß den Fig. 1 und 2 vollständig überein und wird somit insoweit nicht nochmals erläutert.

Die Ausführungsform gemäß Fig. 5 weicht von derjenigen gemäß Fig. 1 dahingehend ab, daß die Siebrecheneinheit 30 schräggestellt ist, und zwar derart, daß ihre Oberkante in Richtung zum Zuflußraum 25' verkippt ist. Um eine stabile Auflage der verkippten Siebrecheneinheit 30 auf der Zwischenwand 24 zu erreichen, ist die - beim Ausführungsbeispiel gemäß Fig. 1 ebene - Oberfläche der Zwischenwand 24 gleichfalls schräg orientiert, so daß die Siebrecheneinheit 30 mit ihrer Unterseite plan auf der Oberseite der Zwischenwand 24 aufliegt.

Da der Siebrechen 30' an der der dem Zuflußraum 25' zugewandten Seite der Siebrecheneinheit 30 angeordnet ist und mit seinem untersten Punkt im wesentlichen mit der dem Zuflußraum 25' zugewandten Seitenfläche der Zwischenwand 24 übereinstimmt, liegt die Oberkante der dem Abflußraum 25'' zugewandten Seitenfläche der Zwischenwand 24 deutlich höher als der unterste Punkt des Siebrechens 30'. Durch diese Schrägstellung der Siebrecheneinheit in Verbindung mit der schrägen Oberfläche der Zwischenwand 24 läßt sich somit erreichen, daß die geneigte Oberfläche 224 der Zwischenwand 24 selbst die Funktion des Stauelements 40 gemäß Fig. 1 übernimmt, d.h. dieses Stauelement bildet. Alternativ kann auch ein separates Stauelement formschlüssig auf die Oberfläche 224, beispielsweise in Form eines dünnen Blechs, aufgesetzt sein, um die Oberseite 224 der Zwischenwand 24 gegenüber der Einwirkung des über sie fließenden Wassers zu schützen.

Bei dieser Ausgestaltung ist die Halterung des Stauelments somit drastisch vereinfacht oder es kann, wie bereits ausgeführt, auch vollständig auf ein separates Stauelement - mit Ausnahme der geneigten Oberfläche 224 der Zwischenwand 24 - verzichtet werden, so daß der Aufwand entsprechend reduziert ist.

In besonders einfacher Weise läßt sich das Stauelement direkt durch die Grundplatte der Siebrecheneinheit 30', mit der diese, die Oberseite 224 überdeckend und gegebenenfalls über die Kanten zu den Seitenflächen der Zwischenwand 24 herabgezogen - auf der Zwischenwand 24 montiert ist, bilden. Die Grundplatte übernimmt somit die zusätzliche Funktion der Aufstauung des Wasserniveaus auf der Zuflußseite.

Ein weiterer Vorteil der Verkippung der Siebrecheneinheit 30 besteht darin, daß das Wasser besser aus dem Sieb zurück zum Zulaufkanal fließen kann, wenn der Wasserspiegel im Zulaufkanal abzusinken beginnt. Damit kann der Verbleib von restlichem Stauwasser in der Siebrecheneinheit nach Absinken des zulaufseitigen Wasserspiegels auf Normalniveau zuverlässig vermieden werden.

Ferner bringt die Verkippung der Siebrecheneinheit den Vorteil, daß das Siebgut in den Endstellungen des Reinigungskamms besser abgestreift werden kann, da das Siebgut besser herabfällt. Damit besteht keinerlei Gefahr einer unerwünscht großen Ansammlung von Siebgut in den Randbereichen des Siebrechens.

Ferner befindet sich das oberseitig auf dem Siebrechen 30' montierte, den Antrieb des oder der Reinigungskämme bewirkende Hydraulikaggregat höher bzw. weiter entfernt von dem Abflußniveau, so daß die Gefahr der Verschmutzung oder Verunreinigung des Hydraulikaggregats verringert ist.

Der Winkel zwischen der Horizontalebene und der Grundplatte der Siebrecheneinheit 30' bzw. der Oberseite 224 der Zwischenwand 24 beträgt gemäß Fig. 5 30°. Der Schrägstellungswinkel kann jedoch zwischen 15° und 60° variiert werden. Vorzugsweise liegt er zwischen 30° und 40°, da hier optimale Ergebnisse im Hinblick auf die vorstehend erläuterten Vorteile erzielt werden.

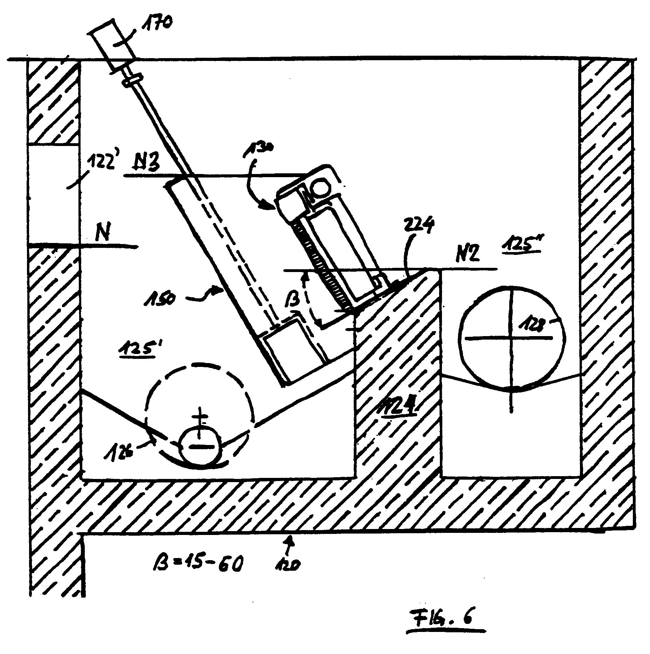

In Fig. 6 ist eine abgeänderte Ausführungsform des Ausführungsbeispiels gemäß den Fig. 3 und 4 dargestellt.

Wie ersichtlich, ist auch hier die Siebrecheneinheit 130 identisch wie bei der Ausführungsform gemäß Fig. 5 schräggestellt. Sämtliche vorstehenden Ausführungen bezüglich der Schrägstellung der Siebrecheneinheit, der Ausgestaltung und Anordnung des Stauelements, der durch die Schrägstellung erzielbaren Vorteile u.s.w., die vorstehend unter Bezugnahme auf Fig. 5 erläutert wurden, treffen auch für die Ausgestaltung gemäß Fig. 6 in identischer Weise zu, so daß zur Vermeidung von Wiederholungen auf die vorstehenden Ausführungen verwiesen wird.

Wie aus Fig. 6 ersichtlich ist, ist nicht nur die Siebrecheneinheit 130, sondern auch das vorgeschaltete Entlastungsbecken 160 samt allen zugehörigen Komponenten verkippt derart angeordnet, daß es - wie bei Fig. 3 - parallel zur Siebrecheneinheit 130 liegt. Die dem Zuflußraum 125' zugewandte Vorderwand des Entlastungsbeckens 160 ist derart verlängert, daß sich trotz der Schrägstellung ein Überlaufniveau N3 ergibt, das höher liegt als das durch den unteren Rand der Öffnung 122' definierte Niveau N.

Von den vorstehenden Abänderungen abgesehen, sind alle übrigen Ausgestaltungen der Ausführungsform nach Fig. 6 identisch mit denjenigen gemäß den Fig. 3 und 4, so daß insoweit auf die vorstehenden Ausführungen verwiesen wird.

## Patentansprüche

1. Abwasseranlage, bestehend aus einem mit mindestens einer Zuflußleitung (26; 126) und mindestens einer Abflußleitung (28; 128) in Verbindung stehenden Entlastungsbecken (20; 120) und einer darin angeordneten Siebrecheneinheit (30; 130), welche einen aus parallel zueinander angeordneten Rechenstäben bestehenden Siebrechen sowie einen hin- und herbewegbaren Reinigungswagen umfaßt, an welchem ein mit Zähnen zwischen den Rechenstäben des Siebrechens angeordneter Reinigungskamm befestigt ist, dadurch gekennzeichnet, daß das Entlastungsbecken (20; 120) durch eine Zwischenwand (24; 124) in einen Zuflußraum (25'; 125') und einen Abflußraum (25''; 125'') unterteilt und an der Zwischenwand (24; 124) die Siebrecheneinheit (30; 130) angeordnet ist, und daß zur Erhöhung des Stauvolumens ein in Fließrichtung hinter der Siebrecheneinheit (30; 130) angeordnetes Stauelement (40; 140) vorgesehen ist, welches unter einem relativ zur Vertikalebene geneigten Winkel (α; α') angeordnet ist.

2. Abwasseranlage nach Anspruch 1, dadurch gekennzeichnet, daß das Stauelement in den Abflußraum (25''; 125'') ragend an der Zwischenwand (24; 124) befestigt ist.

3. Abwasseranlage nach Anspruch 1 oder 2, dadurch gekennzeichnet, daß das Stauelement an der schräg verlaufenden Oberkante der Zwischenwand (24; 124) befestigt oder durch diese gebildet ist.

4. Abwasseranlage nach Anspruch 1, 2 oder 3, dadurch gekennzeichnet, daß das Stauelement (40; 140) in bezug auf die Vertikalebene unter einem in der Größenordnung von 30° bis 45° liegenden Winkel (α; α') angeordnet ist.

5. Abwasseranlage nach einem der vorhergehenden Ansprüche, dadurch gekennzeichnet, daß das Stauelement (40; 140) in Abhängigkeit von der anfallenden Wassermenge in seiner Neigung relativ zur Siebrecheneinheit (30; 130) verstellbar und feststellbar ist.

6. Abwasseranlage nach einem der vorhergehenden Ansprüche, dadurch gekennzeichnet, daß die Niveauhöhe (N1) der Zwischenwand (24) über der Niveauhöhe (N) einer Überlauföffnung (22') liegt, durch welche das Entlastungsbecken (20) mit einem zugeordneten Rückhaltebecken (10) verbunden ist.

7. Abwasseranlage nach einem der Ansprüche 1 bis 5, dadurch gekennzeichnet, daß im Zuflußraum (125') ein der Siebrecheneinheit (130) zugeordnetes und mit einer Vorkammer (161) versehenes Entlastungsbecken (160) angeordnet ist, welches eine oberhalb der Siebrecheneinheit (130) liegende Überlaufkante (164) aufweist.

8. Abwasseranlage nach Anspruch 7, dadurch gekennzeichnet, daß die Niveauhöhe (N3) der Überlaufkante (164) des Entlastungsbeckens (160) über der Niveauhöhe (N) einer Überlauföffnung (122') liegt, durch welche das Entlastungsbecken (120) mit einem zugeordneten Rückhaltebecken (110) verbunden ist.

9. Abwasseranlage nach Anspruch 7 oder 8, dadurch gekennzeichnet, daß in Abhängigkeit von dem Wasserniveau in der Vorkammer (161) das Stauelement (140) sensorgesteuert in seiner Neigung relativ zur Siebrecheneinheit (130) verstellbar und feststellbar ist.

10. Abwasseranlage nach Anspruch 7, 8 oder 9, dadurch gekennzeichnet, daß die Vorkammer (161) des Entlastungsbeckens (160) mit einem über eine Öffnung (162') damit in Verbindung stehenden Siebgutschacht (162) versehen ist, welchem zum Ablassen des Siebgutes ein Schieberelement (165) zugeordnet ist.

11. Abwasseranlage nach Anspruch 10, dadurch gekennzeichnet, daß das Schieberelement (165) über ein mit einem Antrieb (170) in Wirkverbindung stehendes Zugglied (171) zum Öffnen und Schließen betätigbar ist.

12. Abwasseranlage nach einem der vorhergehenden Ansprüche, dadurch gekennzeichnet, daß die Siebrecheneinheit mit ihrer Oberkante in Richtung zum Zuflußraum verkippt ist.

13. Abwasseranlage nach Anspruch 12, dadurch gekennzeichnet, daß der Winkel der Verkippung der Siebrecheneinheit 30; 130) bezüglich der Vertikalebene 15° bis 60°, vorzugsweise 30° bis 40° beträgt.

## Claims

1. Waste water plant, consisting of a spillway basin (20; 120), which is connected to at least one inflow channel (26; 126) and at least one drain channel (28; 128), and of a screening rake unit (30; 130), which is disposed in the basin and comprises a screening rake consisting of parallel rake bars and a reciprocating cleaning carriage to which a cleaning comb is secured, the teeth of which comb are disposed between the rake bars of the screening rake, characterised in that the spillway basin (20; 120) is divided by a partition (24; 124) into an inflow space (25'; 125') and a drain space (25'', 125''), and the screening rake unit (30; 130) is disposed at the partition (24; 124), and that a baffle element (40; 140) is provided to increase the impounded volume, which element is disposed after the screening rake unit (30; 130) in the flow direction and at an angle of inclination (α; α') relative to the vertical plane.

2. Waste water plant according to claim 1, characterised in that the baffle element is secured to the partition (24; 124) so as to project into the drain space (25''; 125'').

3. Waste water plant according to claim 1 or 2, characterised in that the baffle element is secured to the inclined top edge of the partition (24; 124) or is formed by this.

4. Waste water plant according to claim 1, 2 or 3, characterised in that the baffle element (40; 140) is disposed at an angle (α; α') of the order of 30° to 45° with respect to the vertical plane.

5. Waste water plant according to one of the preceding claims, characterised in that the baffle element (40; 140) can be adjusted and fixed in terms of its inclination relative to the screening rake unit (30; 130) in accordance with the quantity of water arising.

6. Waste water plant according to one of the preceding claims, characterised in that the partition (24) is at a height (N1) which is greater than the height (N) of an overflow opening (22') via which the spillway basin (20) is connected to an associated retention basin (10).

7. Waste water plant according to one of claims 1 to 5, characterised in that a spillway basin (160) is disposed in the inflow space (125'), which basin is associated with the screening rake unit (130), is provided with a pre-chamber (161) and comprises an overflow edge (164) lying above the screening rake unit (130).

8. Waste water plant according to claim 7, characterised in that the overflow edge (164) of the spillway basin (160) is at a height (N3) which is greater than the height (N) of an overflow opening (122') via which the spillway basin (120) is connected to an associated retention basin (110).

9. Waste water plant according to claim 7 or 8, characterised in that the baffle element (140) can be adjusted and fixed in terms of its inclination relative to the screening rake unit (130) under the control of sensors in accordance with the water level in the pre-chamber (161).

10. Waste water plant according to claim 7, 8 or 9, characterised in that the pre-chamber (161) of the spillway basin (160) is provided with a screening material shaft (162) which is connected thereto via an opening (162') and with which a slide element (165) is associated for discharging the screening material.

11. Waste water plant according to claim 10, characterised in that the slide element (165) can be actuated via a traction member (171) which is operatively connected to a drive (170).

12. Waste water plant according to one of the preceding claims, characterised in that the screening rake unit is tilted with its top edge in the direction of the inflow space.

13. Waste water plant according to claim 12, characterised in that the angle of tilt of the screening rake unit (30; 130) with respect to the vertical plane is 15° to 60°, preferably 30° to 40°.

## Revendications

1. Installation d'évacuation des eaux usées, constituée par un bassin de déversement (20;120) relié à au moins une canalisation d'amenée (26;126) et à au moins une canalisation d'évacuation (28;128), et par une unité à râteau de tamisage (30;130), disposée dans ce bassin et qui comprend un râteau de tamisage, constitué par des dents parallèles, ainsi qu'un chariot de nettoyage déplaçable en va-et-vient et sur lequel est fixé un peigne de nettoyage, dont les dents s'étendent entre les branches du râteau de tamisage, caractérisée en ce que le bassin de déversement (20;120) est subdivisé par une paroi intercalaire (24;124), en une chambre d'amenée (25';125') et une chambre d'évacuation (25'';125'') et que l'unité à râteau de tamisage (30; 130) est disposée sur la paroi intercalaire (24;124), et que pour accroître le volume de retenue, il est prévu un élément de retenue (40;140), qui est disposé dans la direction d'écoulement en arrière de l'unité formant râteau de tamisage (30;130) en étant incliné d'un angle (α;α') par rapport au plan vertical.

2. Installation d'évacuation des eaux usées selon la revendication 1, caractérisée en ce que l'élément de retenue est fixé dans la chambre d'évacuation (25''; 125'') dans une position en saillie sur la paroi intercalaire (34;134).

3. Installation d'évacuation des eaux usées selon la revendication 1 ou 2, caractérisée en ce que l'élément de retenue est fixé au bord supérieur oblique de la paroi intercalaire (24;124) ou est formé par cette paroi.

4. Installation d'évacuation des eaux usées selon la revendication 1, 2 ou 3, caractérisée en ce que l'élément de retenue (40;140) est disposé de manière à faire, par rapport au plan vertical, un angle (α;α') de l'ordre de 30° à 45°.

5. Installation d'évacuation des eaux usées selon l'une des revendications précédentes, caractérisée en ce que l'inclinaison de l'élément de retenue (40;140) par rapport à l'unité formant râteau de tamisage (30;130) peut être réglée et fixée en fonction de la quantité d'eau arrivante.

6. Installation d'évacuation des eaux usées selon l'une des revendications précédentes, caractérisée en ce que le niveau en hauteur (N1) de la paroi intercalaire (24) se situe au-dessus du niveau en hauteur (N) d'une ouverture de débordement (22'), au moyen de laquelle le bassin de déchargement (20) est relié à un bassin de retenue associé (10).

7. Installation d'évacuation des eaux usées selon l'une des revendications 1 à 5, caractérisée en ce que dans la chambre d'arrivée (125') est disposé un bassin de déchargement (160), qui est associé à l'unité formant râteau de tamisage (130) et est équipé d'une chambre amont (161) et qui possède un bord-déversoir (164) situé au-dessus de l'unité à râteau de tamisage (160).

8. Installation d'évacuation des eaux usées selon la revendication 7, caractérisée en ce que le niveau en hauteur (N3) du bord-déversoir (164) du bassin de déchargement (160) est situé au-dessus du niveau en hauteur (N) d'une ouverture-déversoir (122'), par laquelle le bassin de déchargement (120) est relié à un bassin de retenue associé (110).

9. Installation d'évacuation des eaux usées selon la revendication 7 ou 8, caractérisée en ce que l'inclinaison de l'élément de retenue (140) par rapport à l'unité à râteau de tamisage (130) peut être réglée et fixée, d'une manière commandée par un capteur, en fonction du niveau de l'eau dans la chambre amont (161).

10. Installation d'évacuation des eaux usées selon la revendication 7, 8 ou 9, caractérisée en ce que la chambre amont (161) du bassin de déchargement (160) est équipée d'un conduit (162) pour la matière retenue par tamisage, qui est relié par l'intermédiaire d'une ouverture (162') à ce bassin et auquel un poussoir (165) est associé pour évacuer la matière retenue par tamisage.

11. Installation d'évacuation des eaux usées selon la revendication 10, caractérisée en ce que le poussoir (165) peut être actionné pour l'ouverture et la fermeture par l'intermédiaire d'un organe de traction (171) relié selon une liaison active à un dispositif d'entraînement (170).

12. Installation d'évacuation des eaux usées selon l'une des revendications précédentes, caractérisée en ce que le bord supérieur de l'unité à râteau de tamisage est basculé en direction de la chambre d'amenée.

13. Installation d'évacuation des eaux usées selon la revendication 12, caractérisée en ce que l'angle de basculement de l'unité à râteau de tamisage (30;130) par rapport au plan vertical est compris entre 15° et 60° et de préférence entre 30° et 40°.
